# EUROPEAN PATENT APPLICATION

(11) **EP 4 365 069 A1**
(43) Date of publication of application: **08.05.2024**
(21) Application number: 23207356.9
(22) Date of filing: 02.11.2023
(51) Int. Cl.: B62M 6/50

(54) **FOLDABLE ELECTRIC BICYCLE**

(30) Priority: 02.11.2022 TW 111141748
(71) Applicant: Darad Innovation Corporation, Taoyuan City 333 (TW)
(72) Inventor: Hsu, Po-Jen, 33341 Taoyuan City (TW); Kou, Lun-Chien, 33341 Taoyuan City (TW)
(74) Representative: Straus, Alexander

(57) **Abstract**

A foldable electric bicycle (10) includes a foldable body (12), a first sensing object (26), a motor (14), a motor controller (16), and a first sensor (20). The foldable body (12) includes a first frame (22), a second frame (24), and a latch (28). The first frame (22) is foldably connected to the second frame (24) to make the first frame (22) operably unfolded to a safe state or folded to a folded state relative to the second frame (24). The first sensing object (26) is disposed on the latch (28). The latch (28) is disposed on the second frame (24). The first sensor (20) is disposed on the first frame (22). When the first sensor (20) cannot sense the first sensing object (26), the motor controller (16) turns off the motor (14). As such, the present invention can greatly enhance the operational safety of the foldable electric bicycle (10).

## Description

### Field of the Invention

The present invention relates to a foldable electric bicycle utilizing a sensor to determine whether a latch is engaged with a bicycle frame according to the pre-characterizing clause of claims 1 and 5.

### Background of the Invention

In general, foldable electric bicycles occupy an important position in electric bicycle applications due to their space-saving advantages when being stored. However, the operational safety of their folding mechanisms has always been the major concern for consumers. When improper operations occur during the unfolding and securing process of the foldable electric bicycle or impacts during transportation lead to the foldable electric bicycle being in an incorrect state or malfunctioning, it may easily result in accidents and cause physical injuries to consumers during riding.

### Summary of the Invention

This in mind, the present invention aims at providing a foldable electric bicycle utilizing a sensor to determine whether a latch is engaged with a bicycle frame. Via the aforesaid sensing design, the present invention ensures that the foldable electric bicycle is always in a state where the motor is turned off when the foldable body is folded (i.e., when the first sensor does not sense the first sensing object), so as to prevent accidental motor activation (e.g., the power switch being triggered accidentally by the user). Furthermore, the present invention ensures that the foldable electric bicycle can only turn on the motor when determining the foldable electric bicycle has been in the ready state (indicating that the power switch has been turned on), the first frame and the second frame are in the safe state (indicating that the first frame has been unfolded relative to the second frame), and the first sensor has sensed the first sensing object (indicating that the latch has been engaged with the first frame). In such a manner, the present invention can efficiently solve the safety problem (e.g., the user riding the foldable electric bicycle with the latch being not engaged with the first frame) caused by the improper unfolding operations or impacts leading to the foldable electric bicycle being in an incorrect state. Thus, the present invention can greatly enhance the operational safety of the foldable electric bicycle. This is achieved by a foldable electric bicycle according to claim 1 and a foldable electric bicycle according to claim 5. The dependent claims pertain to corresponding further developments and improvements.

As will be seen more clearly from the detailed description following below, the claimed foldable electric bicycle includes a foldable body, a first sensing object, a motor, a motor controller, and a first sensor. The foldable body includes a first frame, a second frame, and a latch. The first frame is foldably connected to the second frame to make the first frame operably unfolded to a safe state or folded to a folded state relative to the second frame. The first sensing object is disposed on the latch. The latch is disposed on the second frame. The first sensor is disposed on the first frame. When the first sensor cannot sense the first sensing object, the motor controller turns off the motor.

Additionally, a foldable electric bicycle includes a foldable body, a sensing object, a motor, a motor controller, and a sensor. The foldable body includes a first frame and a second frame. The first frame is foldably connected to the second frame to make the first frame operably unfolded to a safe state or folded to a folded state relative to the second frame. The sensing object is disposed on the second frame. The sensor is disposed on the first frame. When the sensor cannot sense the sensing object, the motor controller turns off the motor.

### Brief Description of the Drawings

In the following, the invention is further illustrated by way of example, taking reference to the accompanying drawings thereof:
FIG. 1 is a partial enlarged diagram of a foldable electric bicycle according to an embodiment of the present invention,
FIG. 2 is a top view of the foldable electric bicycle in FIG. 1,
FIG. 3 is a functional block diagram of the foldable electric bicycle in FIG. 1, and
FIG. 4 is a top view of a first frame in FIG. 2 being in a folded state relative to a second frame.

### Detailed Description

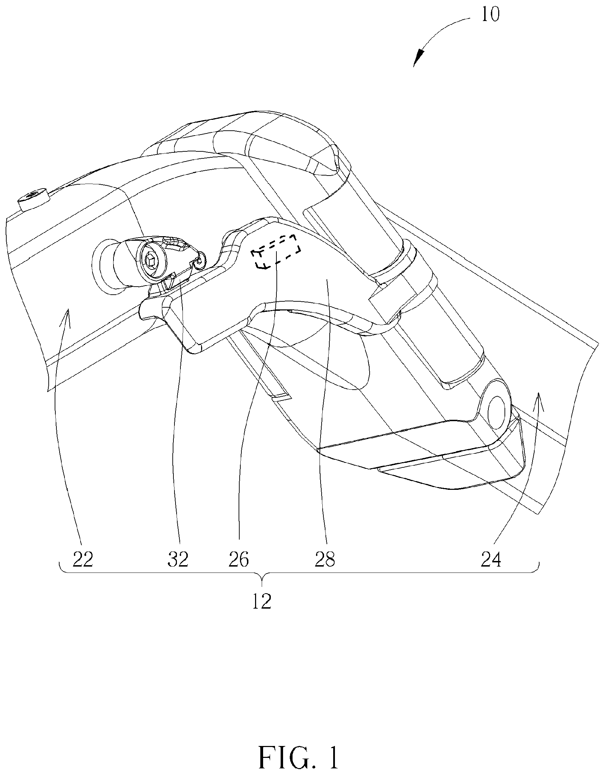

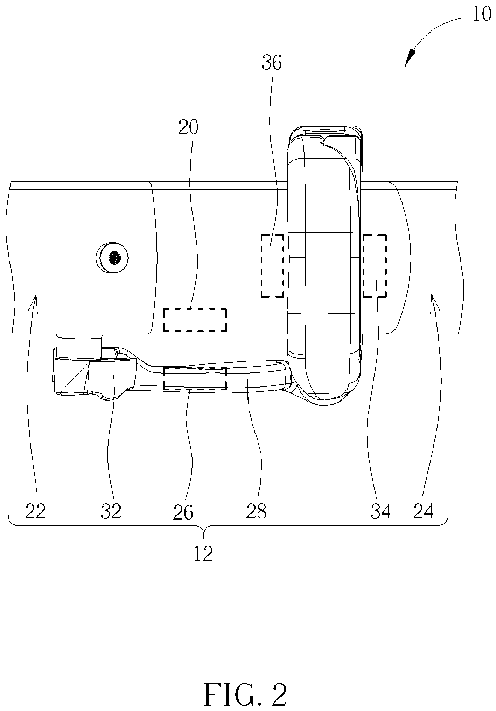

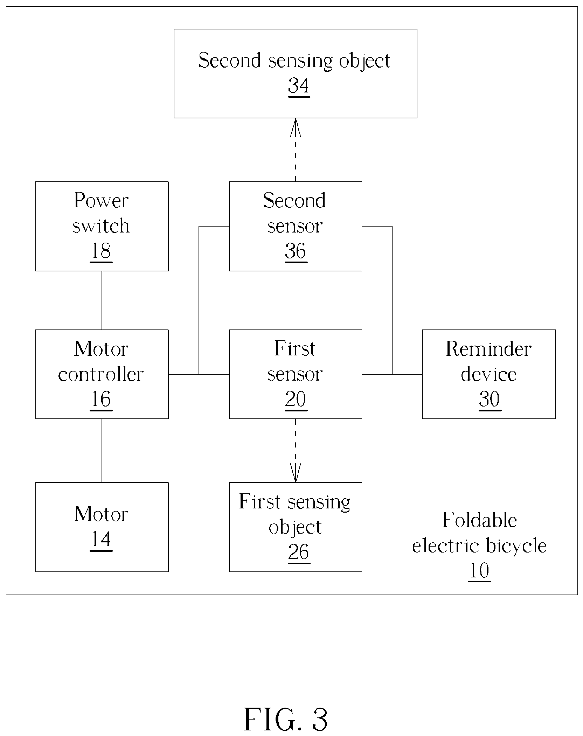

Please refer to FIGS. 1, 2, and 3. FIG. 1 is a partial enlarged diagram of a foldable electric bicycle 10 according to an embodiment of the present invention. FIG. 2 is a top view of the foldable electric bicycle 10 in FIG. 1. FIG. 3 is a functional block diagram of the foldable electric bicycle 10 in FIG. 1. In FIGS. 1 and 2, the foldable electric bicycle 10 is only partially shown with a folding frame, and the related description for the bicycle body design and the power driving design is commonly seen in the prior art and omitted herein. As shown in FIGS. 1, 2, and 3, the foldable electric bicycle 10 includes a foldable body 12, a motor 14, a motor controller 16, a power switch 18, and a first sensor 20 (shown by dashed lines in FIG. 2).

The foldable body 12 could adopt a foldable frame design commonly applied to electric bicycles (the related description is commonly seen in the prior art and omitted herein), allowing the foldable electric bicycle 10 to be folded into a folded state with a smaller volume for subsequent transportation and storage. The foldable body 12 includes a first frame 22, a second frame 24, a first sensing object 26 (shown by dashed lines in FIGS. 1 and 2), and a latch 28. The first frame 22 is foldably connected to the second frame 24, so as to make the first frame 22 operably unfolded to a safe state or folded to the folded state relative to the second frame 24. As shown in FIG. 2, the first sensing object 26 is disposed on the latch 28, the first sensor 20 is disposed on the first frame 22, and the latch 28 (preferably a hook arm pivotally connected to the second frame 24 as shown in FIG. 1, but not limited thereto) is disposed on the second frame 24. The latch 28 is engaged with the first frame 22 (e.g., by engaging a groove of the first frame 22 with a hook, but not limited thereto) when the first frame 22 is unfolded into the safe state relative to the second frame 24, so as to keep the first frame 22 and the second frame 24 in the safe state for preventing accidental folding of the foldable body 12. As such, a user can smoothly perform related riding operations of the foldable electric bicycle 10. In this embodiment, the first sensing object 26 could be preferably a magnet, and the first sensor 20 could be a Hall sensor. Accordingly, the first sensor 20 can sense the first sensing object 26 when the first sensing object 26 approaches within a certain distance, so as to determine whether the latch 28 has moved to be securely engaged with the first frame 22. As for the related description for the magnetic sensing principle of the Hall sensor, it is commonly seen in the prior art and omitted herein. To be noted, the sensing design adopted by the foldable electric bicycle 10 is not limited to the aforesaid magnetic sensing design, meaning that the present invention could also adopt other proximity sensors, such as inductive proximity sensors or capacitive proximity sensors.

The motor 14 is disposed on the foldable body 12 to drive at least one wheel (preferably two wheels, but not limited thereto) of the foldable electric bicycle 10 to rotate, assisting the user in riding the foldable electric bicycle 10 forward effortlessly. The motor controller 16 is electrically connected to the motor 14 to turn on or off the motor 14, and the power switch 18 is electrically connected to the motor controller 16. When the power switch 18 is turned on, the foldable electric bicycle 10 can enter a ready state, and the motor controller 16 can turn on or off the motor 14 according to the subsequent sensing results of the engagement state between the foldable body 12 and the latch 28.

In practical applications, as shown in FIG. 3, the foldable electric bicycle 10 could further include a reminder device 30. The reminder device 30 is electrically connected to the first sensor 20 to output a warning when the first sensor 20 cannot detect the first sensing object 26, so as to reminder the user that the foldable electric bicycle 10 is in a state where the latch 28 is not engaged with the first frame 22. The reminder device 30 could preferably output a warning in an image display manner (e.g., utilizing a monitor to show warning images) or a sound warning manner (e.g., utilizing a speaker to emit warning sounds), but the present invention is not limited thereto, meaning that the present invention could adopt other warning designs, such as utilizing light sources (e.g., LEDs) to emit flashing warning lights. Furthermore, for ensuring that the latch 28 is securely engaged with the first frame 22, as shown in FIG. 1, the foldable body 12 could further include a locking hook 32. The locking hook 32 is disposed on the first frame 22 and could be preferably a hook structure that can be securely engaged with the latch 28. Thus, the locking hook 32 can be detachably engaged with the latch 28 when the first frame 22 is unfolded relative to the second frame 24, so as to keep the first frame 22 and the second frame 24 in the safe state as shown in FIG. 1 more steadily.

For further determining that the first frame 22 and the second frame 24 are unfolded incompletely and not engaged with each other even when the latch 28 is engaged with the first frame 22, the foldable electric bicycle 10 could adopt a frame engagement sensing design. For example, as shown in FIG. 2, the foldable body 12 could include a second sensing object 34, and the foldable electric bicycle 10 could include a second sensor 36. The second sensing object 34 could be disposed on the second frame 24, and the second sensor 36 could be correspondingly disposed on the first frame 22. The second sensing object 34 could be preferably a magnet, and the second sensor 36 could be preferably a Hall sensor (but not limited thereto, meaning that the present invention could adopt other sensing designs, such as optical sensing designs). The second sensor 36 can sense the second sensing object 34 when the second sensing object 34 approaches within a certain distance for determining whether the first frame 22 has been unfolded into the safe state as shown in FIG. 1 relative to the second frame 24. The aforesaid design helps the user know whether the first frame 22 has been unfolded completely and engaged with the second frame 24. To be noted, the aforesaid warning design could also be applied to output a warning when the second sensor 36 cannot sense the second sensing object 34, so as to reminder the user that the foldable electric bicycle 10 is in a state where the first frame 22 is not properly unfolded and not engaged with the second frame 24. In brief, as shown in FIG. 3, the reminder device 30 is electrically connected to the second sensor 36 for outputting a warning in an image display manner or a sound warning manner when the second sensor 36 cannot sense the second sensing object 34. As mentioned above, the present invention could also adopt other warning designs, such as utilizing light sources (e.g., LEDs) to emit flashing warning lights.

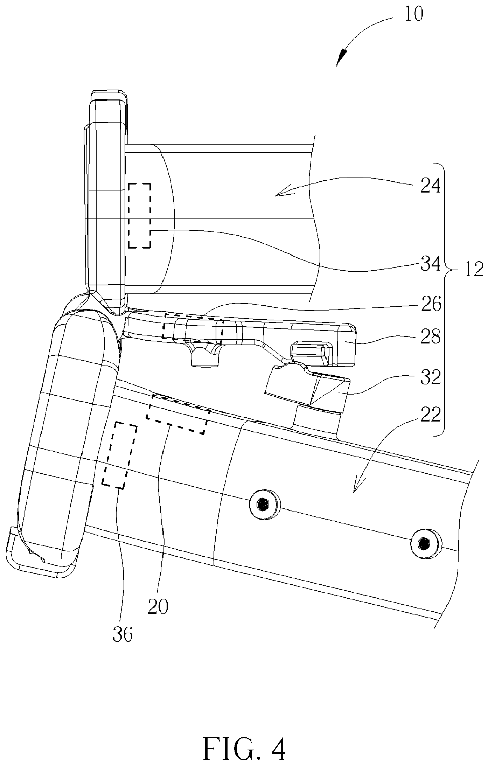

More detailed description for the sensing design of the foldable electric bicycle 10 is provided as follows. Please refer to FIGS. 1, 2, 3, and 4. FIG. 4 is a top view of the first frame 22 in FIG. 2 being in the folded state relative to the second frame 24. First, when the user wants to fold the foldable electric bicycle 10, the user simply needs to pivot the latch 28 relative to the second frame 24 from a position as shown in FIG. 2 to a position as shown in FIG. 4, so as to disengage the latch 28 from the locking hook 32. Next, the user can fold the first frame 22 relative to the second frame 24 from the safe state as shown in FIG. 2 to the folded state as shown in FIG. 4. During this process, since the first sensing object 26 has moved with pivoting of the latch 28 from a position where the first sensing object 26 can be magnetically sensed by the first sensor 20 (as shown in FIG. 2) to a position where the first sensing object 26 cannot be sensed by the first sensor 20 beyond a specific distance (as shown in FIG. 4), the motor controller 16 can turn off the motor 14 according to the sensing results from at least one of the first sensor 20 and the second sensor 36. At this time, with folding of the first frame 22 relative to the second frame 24, the second sensing object 36 can also move from a position where the second sensing object 36 can be magnetically sensed by the second sensor 34 (as shown in FIG. 2) to a position where the second sensing object 36 cannot be sensed by the second sensor 34 (as shown in FIG. 4). In such a manner, the present invention can prevent the foldable electric bicycle 10 from accidentally turning on the motor 14 (e.g., the power switch 18 being triggered accidentally by the user) when the foldable body 12 is in the folded state, thereby enhancing the folding safety of the foldable electric bicycle 10.

On the other hand, if the user wants to ride the foldable electric bicycle 10, the user simply needs to pull the first frame 22 from a folded position as shown in FIG. 4 to a position where the first frame 22 is engaged with the second frame 24. Subsequently, the user needs to pivot the latch 28 relative to the second frame 24 from a position as shown in FIG. 4 to a position as shown in FIG. 2 for engaging the latch 28 with the locking hook 32, so as to keep the first frame 22 and the second frame 24 in the safe state and prevent accidental folding of the foldable electric bicycle 10.

After the user has completed the aforesaid unfolding operation of the foldable electric bicycle 10 to ensure that the first frame 22 and the second frame 24 are in the safe state and the user has pressed the power switch 18 to put the foldable electric bicycle 10 into the ready state, the first sensing object 26 has moved with pivoting of the latch 28 from the position where the first sensing object 26 cannot be sensed by the first sensor 20 as shown in FIG. 4 to the position where the first sensing object 26 can be magnetically sensed by the first sensor 20 as shown in FIG. 2, and the second sensing object 36 has moved with unfolding of the first frame 22 relative to the second frame 24 from the position where the second sensing object 36 cannot be sensed by the second sensor 34 as shown in FIG. 4 to the position where the second sensing object 34 can be magnetically sensed by the second sensor 34 as shown in FIG. 2. As such, the motor controller 16 can turn on the motor 14 according to the sensing results from the first sensor 20 and the second sensor 36, so as to allow the user to smoothly perform the related riding operations of the foldable electric bicycle 10.

Via the aforesaid sensing designs, the present invention ensures that the foldable electric bicycle is always in a state where the motor is turned off when the foldable body is folded (i.e., when the first sensor does not sense the first sensing object or when the second sensor does not sense the second sensing object), so as to prevent accidental motor activation (e.g., the power switch being triggered accidentally by the user). Furthermore, the present invention ensures that the foldable electric bicycle can only turn on the motor when determining the foldable electric bicycle has been in the ready state (indicating that the power switch has been turned on), the first frame and the second frame are in the safe state (indicating that the first frame has been unfolded relative to the second frame), the first sensor has sensed the first sensing object (indicating that the latch has been engaged with the first frame), and the second sensor has sensed the second sensing object (indicating that the first frame has been unfolded completely and engaged with the second frame). In practical applications, the aforesaid frame engagement detection and the aforesaid latch engagement detection could be implemented alternatively for simplifying the sensing design of the present invention. In such a manner, the present invention can efficiently solve the safety problem (e.g., the user riding the foldable electric bicycle with the latch being not engaged with the first frame or with the first frame being not properly unfolded and not engaged with the second frame) caused by the improper unfolding operations or impacts leading to the foldable electric bicycle being in an incorrect state. Thus, the present invention can greatly enhance the operational safety of the foldable electric bicycle.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A foldable electric bicycle (10) comprising:
a foldable body (12) comprising a first frame (22), a second frame (24), and a latch (28), the first frame (22) being foldably connected to the second frame (24) to make the first frame (22) operably unfolded to a safe state or folded to a folded state relative to the second frame (24); **characterized by**:
a first sensing object (26) disposed on the latch (28), the latch (28) being disposed on the second frame (24);
a motor (14) and a motor controller (16); and
a first sensor (20) disposed on the first frame (22);
wherein when the first sensor (20) cannot sense the first sensing object (26), the motor controller (16) turns off the motor (14).

2. The foldable electric bicycle (10) of claim 1, **characterized in that** the foldable electric bicycle (10) further comprises:
a reminder device (30) coupled to the first sensor (20), for outputting a warning when the first sensor (20) cannot sense the first sensing object (26).

3. The foldable electric bicycle (10) of claim 1, **characterized in that** the foldable body (12) further comprises a second sensing object (34), the foldable electric bicycle (10) further comprises a second sensor (36), the second sensing object (34) is disposed on the second frame (24), the second sensor (36) is disposed on the first frame (22) for sensing the second sensing object (34) when the first frame (22) is unfolded to the safe state relative to the second frame (24), and the motor controller (16) turns off the motor (14) when the first sensor (20) cannot sense the first sensing object (26) or the second sensor (36) cannot sense the second sensing object (34).

4. The foldable electric bicycle (10) of claim 3, **characterized in that** the first sensing object (26) and the second sensing object (34) are magnets, and the first sensor (20) and the second sensor (36) are Hall sensors.

5. A foldable electric bicycle (10) comprising:
a foldable body (12) comprising a first frame (22) and a second frame (24), the first frame (22) being foldably connected to the second frame (24) to make the first frame (22) operably unfolded to a safe state or folded to a folded state relative to the second frame (24); **characterized by**:
a sensing object (26, 34) disposed on the second frame (24);
a motor (14) and a motor controller (16); and
a sensor (20, 36) disposed on the first frame (22);
wherein when the sensor (20, 36) cannot sense the sensing object (26, 34), the motor controller (16) turns off the motor (14).

6. The foldable electric bicycle (10) of claim 5, **characterized in that** the foldable electric bicycle (10) further comprises:
a reminder device (30) coupled to the sensor (20, 36), for outputting a warning when the sensor (20, 36) cannot sense the sensing object (26, 34).

7. The foldable electric bicycle (10) of claim 5, **characterized in that** the sensing object (26, 34) is a magnet, and the sensor (20, 36) is a Hall sensor.
